# EUROPÄISCHE PATENTSCHRIFT

(11) **EP 0 428 528 B1**
(45) Veröffentlichungstag und Bekanntmachung des Hinweises auf die Patenterteilung: **17.03.1993**
(21) Anmeldenummer: 89907092.4
(22) Anmeldetag: 03.07.1989
(51) Int. Cl.: G06F 1/00

(54) **EINRICHTUNG ZUM SCHUTZ VON DATEN**
DATA SECURITY DEVICE
DISPOSITIF DE PROTECTION DE DONNEES

(30) Priorität: 07.07.1988 DE 8808722 U; 29.04.1989 DE 3914239
(43) Veröffentlichungstag der Anmeldung: 29.05.1991
(73) Patentinhaber: TELEINT Gesellschaft für Computer- und Telekommunikationsprodukte mbH, 64347 Griesheim (DE)
(72) Erfinder: VERWEYEN, Gregor, D-6100 Darmstadt (DE)
(86) Internationale Anmeldenummer: DE8900438
(87) Internationale Veröffentlichungsnummer: WO9000771

(56) Entgegenhaltungen:
- Patent Abstracts of Japan, Band 12, Nr. 276 (P-737)(3123), 30.Juli 1988.
- Patent Abstracts of Japan, Band 11, Nr. 274 (P-612)(2721), 5.September 1987.
- IBM TDB, Band 4, Nr. 10, Maerz 1962, (New York, US), A.F. Shugart: "Recorded data security device" Seite 44.
- Patent Abstracts of Japan, Band 12, Nr. 97 (P-682)(2944), 30 Maerz 1988.
- Patent Abstracts of Japan, Band 9, Nr. 24 (P-331)(1747), 31. Januar 1985.

## Beschreibung

### Technisches Gebiet

Die Erfindung betrifft eine Einrichtung zum Schutz von Daten vor unberechtigtem Zugriff für einen Computer mit mindestens einem fest angeordneten Speicher, mit einer Schreibund/oder Leseeinrichtung (Laufwerk) für einen beweglichen Datenträger und mit einem den Computer und die Schreib- und/oder Leseeinrichtung verbindenden Bus.

Bei Computern mit einem fest angeordneten Speicher, wie beispielsweise einem Festplattenlaufwerk, ist üblicherweise zusätzlich ein Laufwerk für einen beweglichen Datenträger vorgesehen, um in einfacher Weise dem Computer Programme und Daten zuführen zu können. Außerdem kann das Laufwerk für den beweglichen Datenträger zur Datensicherung verwendet werden.

Bei den meisten derartigen Computern, insbesondere bei sogenannten Personalcomputern, wird nach dem Einschalten unter anderem das Betriebssystem von der Festplatte in den Arbeitsspeicher des Computers geladen. häufig wird jedoch zuvor abgefragt, ob sich im Diskettenlaufwerk eine Diskette mit einem Betriebssystem befindet. Falls letzteres der Fall ist, wird das Betriebssystem von der Diskette anstelle desjenigen von der Festplatte geladen.

Während bei dem Laden des Betriebssystems von der Festplatte unter anderem durch die selbsttätige Ausführung einer Stapeldatei (AUTOEXEC.BAT) weitgehende Sicherheitsmaßnahmen möglich sind, ist beim Laden des Betriebssystems von der Diskette ein unerwünschter Zugriff auf den Computer leicht möglich. So können beispielsweise nach dem Laden des Betriebssystems von der Diskette mit Hilfe dieses Betriebssystems beliebige Dateien auf der Festplatte gelöscht, verändert und auf die Diskette kopiert werden. Ferner ist es dabei möglich, Dateien von der Diskette auf die Festplatte zu kopieren und somit Programme in den Computer einzubringen, welche mit sogenannten Viren behaftet sind.

### Stand der Technik

Es sind zwar schon mechanisch wirkende Sperren für Diskettenlaufwerke bekannt, beispielsweise aus dem Gebrauchsmuster 85 28 552.8. Diese erfordern jedoch ein umständliches Hantieren und spezielle Konstruktionen des Diskettenlaufwerks.

Durch "Patent Abstract of Japan", Vol. 12, No. 97 (P-682) und JP-A 62 229 425 ist eine Vorrichtung bekanntgeworden, welche die versehentliche Aufhebung eines Schreibschutzes verhindert. Dazu wird ein Schreib-Torsignal mit einem durch die Decodierung eines Befehls gewonnenen Signal zu einem Schreibchutzsignal verknüft. Für einen Schutz von Daten vor einem unberechtigten Zugriff ist diese Vorrichtung jedoch nicht geeignet.

Bei einer anderen, aus "IBM, Technical Disclosure Bulletin", Band 4, Nr. 10, März 1962, Seite 44 bekanntgewordenen Vorrichtung werden die von einem Plattenspeicher gelesenen Signale über eine Torschaltung geleitet, die von decodierten Signalen gesteuert wird, welche ebenfalls vom Plattenspeicher gelesen werden. Diese Vorrichtung hat ein sicheres Lesen der Daten zum Zweck - insbesondere wird das Lesen nur auf diejenigen Daten beschränkt, die gelesen werden sollen.

### Darstellung der Erfindung

Aufgabe der vorliegenden Erfindung ist es, einen Schutz von Daten in einem Computer auch dann zu ermöglichen, wenn ein Laufwerk mit einem beweglichen Datenträger vorhanden ist. Dabei kann der Schutz der Daten je nach Anforderungen im einzelnen ein Schutz vor unberechtigtem Kopieren auf den beweglichen Datenträger und/oder ein Schutz der im Computer gespeicherten Daten vor unberechtigtem Löschen oder Verändern bestehen.

Die erfindungsgemäße Einrichtung ist dadurch gekennzeichnet, daß eine Schalteinrichtung als separate Baueinheit ausgeführt ist und in an sich bekannter Weise einen Decoder für ein einem Eingang zugeführtes Freigabesignal, einen Speicher für das Ausgangssignal des Decoders und mindestens einen mit einem Ausgang verbundenen Schalter, vorzugsweise Halbleiterschalter, umfaßt, der von dem gespeicherten Ausgangssignal des Decoders steuerbar ist, daß Mittel zur Verbindung des Eingangs mit einer zur Zuführung des Freigabesignals vom Computer geeigneten Leitung des Busses vorgesehen sind und daß Mittel zur Verbindung des Ausgangs mit einer Leitung des Busses vorgesehen sind, welche einen schreibenden und/oder lesenden Zugriff auf den beweglichen Datenträger sperrt und/oder freigibt.

Die erfindungsgemäße Einrichtung verhindert eine Entnahme und eine Eingabe von Daten über einen beweglichen Datenträger. Obwohl eine wesentliche Anwendung der Erfindung zusammen mit solchen Computern gegeben ist, welche nach dem Einschalten beim Laden des Betriebssystems auch das Diskettenlaufwerk abfragen, ist eine erfolgreiche Anwendung bei anderen Computern nicht ausgeschlossen. So kann beispielsweise auch während des Betriebs eines Computers wegen Abwesenheit des berechtigten Bedieners ein Sperren des Diskettenlaufwerks mit der erfindungsgemäßen Einrichtung vorteilhaft sein.

Eine besonders einfache Freigabe des Diskettenlaufwerks wird gemäß einer Weiterbildung dadurch ermöglicht, daß das Freigabesignal vom Computer mit Hilfe eines in dem fest angeordneten Speicher abgelegten Programms - vorzugsweise nach Eingabe eines Paßwortes - erzeugt und der Schalteinrichung zugeführt wird. Mit Hilfe einer anderen Weiterbildung, die darin besteht, daß ferner ein Sperrsignal vorgegeben ist, das den Zugriff auf den beweglichen Datenträger sperrt, ist in einfacher Weise ein Sperren des Diskettenlaufwerks möglich, wenn beispielsweise der berechtigte Bediener den Computer verläßt, ohne ihn abzuschalten.

Bei einer anderen Weiterbildung der Erfindung ist vorgesehen, daß verschiedene Signale für das Sperren bzw. Freigeben des schreibenden und des lesenden Zugriffs vorgesehen sind. Dadurch kann die Sperrung selektiv erfolgen, so daß beispielsweise eine Datensicherung möglich ist, obwohl das Lesen von fremden Programmen von einer Diskette unterbunden wird.

Bei einer bevorzugten Ausführungsform der Erfindung ist vorgesehen, daß die Schalteinrichtung einen Decoder für das Freigabesignal bzw. das Sperrsignal, einen Speicher für das Ausgangssignal des Decoders und mindestens einen Schalter, vorzugsweise Halbleiterschalter, umfaßt.

Eine andere Weiterbildung besteht darin, daß das Programm zur Erzeugung des Freigabesignals durch Eingabe des Programmnamens zusammen mit dem Paßwort aufrufbar ist. Dadurch kann der Programmaufruf aus einer Stapeldatei heraus erfolgen, so daß dann für einen Computer mit einer erfindungsgemäßen Einrichtung kein zusätzlicher Bedienungsaufwand zur Freigabe des Diskettenlaufwerks erforderlich ist. Dabei kann die Benutzungsberechtigung in an sich bekannter Weise durch ein zuvor in der Stapeldatei (AUTOEXEC.BAT bei dem Betriebssystem DOS) aufgeführtes Programm geprüft werden.

Um zu verhindern, daß das Paßwort dadurch ermittelt wird, daß mit Hilfe eines Programms automatisch das Programm zur Freigabe wiederholt mit jeweils geändertem Paßwort aufgerufen wird, kann gemäß einer anderen Weiterbildung vorgesehen sein, daß bei einer vorgegebenen Anzahl von Eingaben des Programmnamens mit einem falschen Paßwort ein weiterer Aufruf des Programms zusammen mit dem Paßwort verhindert wird.

Insbesondere teure Anwenderprogramme werden häufig vor unerlaubter Benutzung von Kopien dadurch geschützt, daß mit dem Programm ein Festwertspeicher (PROM) geliefert wird, der ein Codewort enthält und beim Installieren mit einer Schnittstelle des Computers verbunden wird. Beim Starten des Anwenderprogramns wird dann das Codewort abgefragt, worauf eine Fortsetzung des Programms nur bei richtigem Codewort möglich ist. Diese auch Hardlock genannte Sicherung kann in vorteilhafter Weise mit der erfindungsgemäßen Einrichtung dadurch kombiniert werden, daß ferner in der Schalteinrichtung ein Speicher für ein Codewort vorgesehen ist.

Gemäß einer weiteren Ausführungsform der Erfindung ist vorgesehen, daß die steuerbare Schalteinrichtung auf einer Steuerkarte angeordnet ist, welche zur Steuerung der Schreib- und/oder Leseeinrichtung vorgesehen ist.

Eine andere Ausführungsform der Erfindung bewirkt, daß ein schreibender Zugriff auf den fest angeordneten Speicher gesperrt ist und nur freigegeben wird, wenn der Schalteinrichtung ein vorgegebenes Freigabesignal zugeführt wird. Dadurch kann Benutzern eines Personalcomputers das Arbeiten mit Programmen und Daten, die auf der Festplatte oder auf Disketten gespeichert sind, ermöglicht werden, ohne daß eine Veränderung der Programme und Daten auf der Festplatte möglich ist. Dieses ist beispielsweise besonders vorteilhaft, wenn Personalcomputer zu Unterrichtszwecken Studenten zur Verfügung gestellt werden.

Durch die in den weiteren Unteransprüchen aufgeführten Maßnahmen sind weitere vorteilhafte Weiterbildungen und Verbesserungen der in Hauptanspruch angegebenen Erfindung möglich.

### Kurze Beschriebung der Zeichnung

Ausführungsbeispiele der Erfindung sind in der Zeichnung anhand mehrerer Figuren dargestellt und in der nachfolgenden Beschreibung näher erläutert. Es zeigt:
Fig. 1 Teile eines Personalcomputers in schematischer Darstellung,
Fig. 2 ein Blockschaltbild eines ersten Lusführungsbeispiels,
Fig. 3 ein Blockschaltbild eines zweiten Lusführungsbeispiels,
Fig. 4 ein Blockschaltbild eines dritten Lusführungsbeispiels,
Fig. 5 ein Flußdiagramm eines Programms zur Freigabe eines Diskettenlaufwerks mit einer erfindungsgemäßen Einrichtung,
Fig. 6 eine Ansicht einer Schalteinrichtung gemäß der Erfindung,
Fig. 7 eine Tabelle mit Nummern und Bezeichnungen der für die erfindungagemäße Einrichtung relevanten Leitungen bzw. Steckeranschlüsse des Shugart-Busses,
Fig. 8 ein Ausführungsbeispiel mit einer in einen Disc Controller Integrierten Schalteinrichtung und
Fig. 9 ein Ausführungsbeispiel, mit welchem ein schreibender Zugriff auf die Festplatte gesperrt werden kann.

Gleiche Teile sind in den Figuren mit gleichen Bezugszeichen versehen.

### Wege zur Ausführung der Erfindung

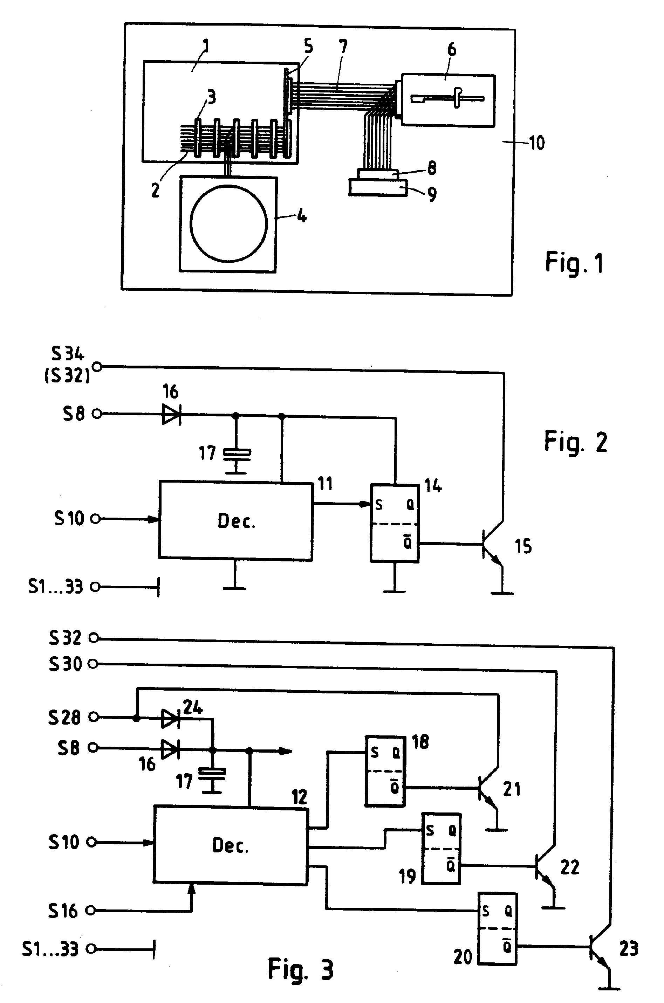

Bei dem in Fig. 1 schematisch dargestellten Computer ist eine Hauptplatine 1 vorgesehen, auf welcher die wichtigsten Schaltungen des Computers angeordnet sind. An dem System-Bus 2 sind mehrere Steckvorrichtungen 3 vorgesehen, in welche verschiedene Steckkarten eingesteckt werden können. Zur Erläuterung der Erfindung ist lediglich der Anschluß eines Festplattenlaufwerks 4 sowie einer Steuerkarte 5 (Controller) für ein Diskettenlaufwerk 6 vorgesehen.

Die Steuerkarte 5 und das Diskettenlaufwerk 6 sind über einen sogenannten Shugart-Bus 7 verbunden, der mit 34-poligen Kontaktleisten an die Steuerkarte 5 und eine entsprechende Steckvorrichtung des Diskettenlaufwerks 6 angeschlossen ist. Ferner ist mit dem Shugart-Bus 7 über eine weitere Steckleiste 8 eine Schalteinrichtung 9 verbunden. Diese kann sowohl bei der Montage des Computers eingebaut werden, als auch nachgerüstet werden. Das Nachrüsten ist besonders einfach, wenn der Shugart-Bus 7 ohnehin - wie bei vielen Computern - eine Reserve-Kontaktleiste 8 aufweist. Anderenfalls kann ein einfaches Adapterkabel verwendet werden.

Die Schalteinrichtung 9 kann bei geschlossenem Gehäuse 10 des Computers nicht entfernt werden. Vorsorglich kann ein Siegel über die Verbindungslinie zwischen der Kontaktleiste 8 und der Schalteinrichtung 9 geklebt werden, so daß auch ein vorübergehendes Entfernen der Schalteinrichtung 9 nachträglich festgestellt werden kann.

Die erfindungsgemäße Einrichtung kann auch bei Computern mit mehreren Diskettenlaufwerken angewendet werden, wobei ebenfalls eine einzelne Schalteinrichtung 9 mit dem Shugart-Bus zu verbinden ist.

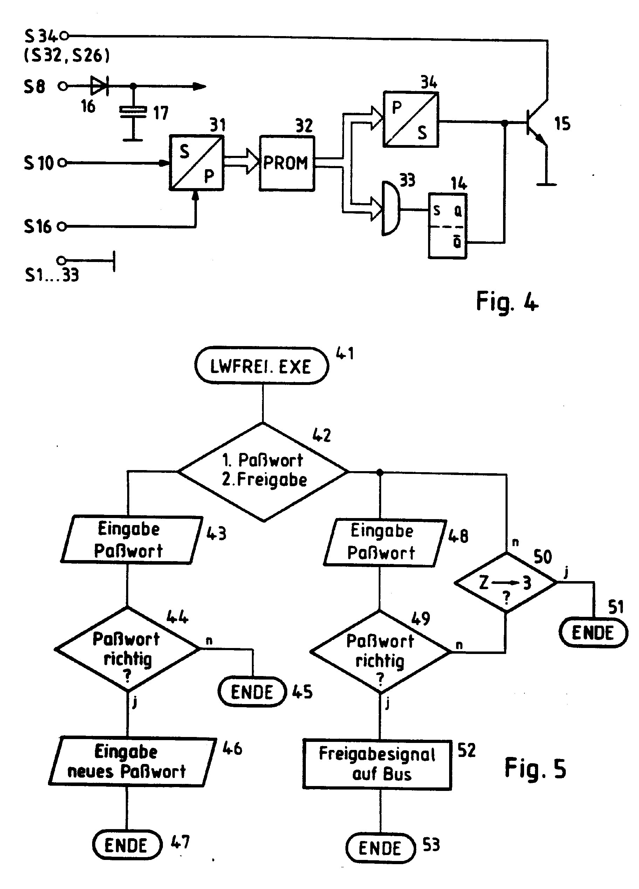

Vor dem Anschließen der Schalteinrichtung 9 ist ein Programm zur Freigabe des Diskettenlaufwerks 6 auf die Festplatte 4 zu kopieren, da nach dem Einsetzen der Schalteinrichtung 9 dieses nicht mehr möglich ist. Ein geeignetes Programm ist beispielhaft in Fig. 4 dargestellt. Zunächst werden jedoch Ausführungsbeispiele der Schalteinrichtung anhand der Figuren 2 bis 4 näher erläutert. Die Schalteinrichtung 9 kann mit handelsüblichen elektronischen Bauelementen als kleine gedruckte Schaltung realisiert und beispielsweise mit Kunststoff vergossen werden, so daß ein kompaktes Modul entsteht.

Die Ausführungsbeispiele gemäß den Figuren 2 bis 4 sind für einen Shugart-Bus ausgelegt. Zur Unterscheidung gegenüber den Bezugszeichen ist den Anschlußnummern des Shugart-Busses ein S vorangestellt.

Bei allen Ausführungsbeispielen ist ein Decoder 11, 12, 13 vorgesehen, dessen Eingang mit dem Anschluß S10 verbunden ist. Die entsprechende Leitung des Shugart-Busses ist an sich zur Adressierung eines Laufwerks 0 vorgesehen, wird jedoch bei praktisch allen bekannten Personalcomputern nicht benutzt. Es ist daher die Übertragung des Freigabesignals bzw. auch des Sperrsignals über diese Leitung bzw. den Anschluß S10 zum Decoder 11, 12, 13 möglich. Je nach Erfordernissen im einzelnen kann das Freigabesignal aus einem einzelnen Impuls oder aus einem möglicherweise viele Binärstellen umfassenden Datenwort bestehen.

Nach dem Einschalten nimmt das Flip-Flop 14 den Zustand Q̅ = 1 (positive Spannung) ein. Dadurch wird der an den Ausgang Q̅ angeschlossene Transistor 15 leitend, so daß der Anschluß S34 mit Masse verbunden wird. Dadurch wird dem Computer signalisiert, daß das Diskettenlaufwerk 6 nicht geschlossen ist, so daß dieser keine befrage von Daten von der Kassette vornimmt. Bei Computern, bei welchen keine entsprechende Abfrage über die Leitung S34 vorgesehen ist, kann statt dessen der Transistor 15 die Leitung S32 mit Masse verbinden. Dieses bewirkt, daß nur auf die Seite 1 der Diskette zugegriffen werden kann, was bei der üblichen Formatierung der Disketten ebenfalls sowohl ein Schreiben als auch ein Lesen verhindert. Der Decoder 11 bei dem Ausführungsbeispiel gemäß Fig. 2 vergleicht das angekommene Freigabesignal mit einem gespeicherten und setzt darauf das Flip-Flop 14, das an den Ausgang des Decoders 11 angeschlossen ist. Dadurch nimmt der Ausgang Q̅ das Potential 0V ein, so daß der Transistor 15 nichtleitend und ein Zugriff auf die Diskette möglich wird.

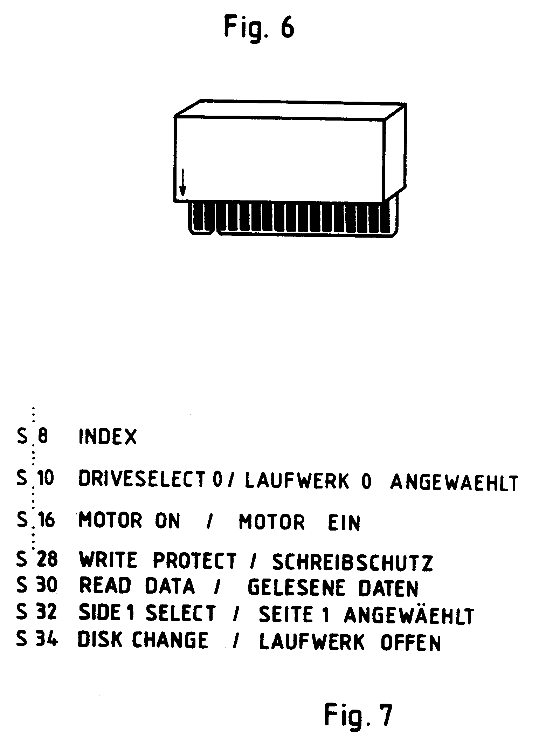

Soll mit der in Fig. 2 dargestellten Schalteinrichtung nur ein schreibender oder nur ein lesender Zugriff auf die Diskette verhindert werden, so kann mit Hilfe des Transistors 15 die Leitung S28 oder die Leitung S30 mit Masse verbunden werden (siehe Tabelle Fig. 7).

Die in den Figuren 2 bis 4 dargestellten Schalteinrichtungen weisen ferner Masseverbindungen mit einer oder mehreren der Leitungen S1 bis S33 auf. Schließlich erfolgt aus dem Shugart-Bus noch die Spannungsversorgung der Schatteinrichtung. Dieses geschieht bei den Ausführungsbeispiel nach Fig. 2 mit Hilfe der Leitung S8, welche das Indexsignal führt, das jedoch während des weitaus größten Teils der Periodendauer 5V beträgt, und nur beim betasten des Indexlochs der Diskette auf 0V fällt. Dieses Signal wird mit Hilfe einer Diode 16 gleichgerichtet, an die sich ein Ladekondensator 17 anschließt.

Bei dem Ausführungsbeispiel nach Fig. 3 kann der Decoder 12 zwischen mehreren zugeführten Signalen unterscheiden. Er weist drei Ausgänge auf, an die jeweils ein Flip-Flop 18, 19, 20 angeschlossen ist, während Ausgänge mit den Basisanschlüssen von Transistoren 21, 22, 23 verbunden sind. Je nach zugeführtem Steuersignal können die Leitungen S28, S30 und/oder S32 mit Masse verbunden werden. Dadurch kann mit Hilfe eines entsprechenden Programms ein Sperren des lesenden oder des schreibenden Zugriffs oder eine vollständige Sperrung des Diskettenlaufwerks vorgenommen werden.

Durch den Kurzschluß der Leitung S32 mit Hilfe des Transistors 23 wird - wie bereits im Zusammenhang mit Fig. 2 erwähnt - ein Zugriff auf die Seite 2 der Diskette verhindert. Wird mit Hilfe der Schalteinrichtung 9 nur diese Leitung kurzgeschlossen, so kann ein Zugriff auf eine nur auf Seite 1 beschriebene Diskette erfolgen. Mit einer derart speziellen Diskette kann in diesem Fall die erfindungsgemäße Einrichtung umgangen werden. Damit kann beispielsweise ein Computer in Betrieb genommen werden, wenn durch einen Fehler das Betriebessystem nicht von der Festplatte geladen werden kann oder wenn das in einem Festwertapeicher abgelegte Ein-/Ausgabesystem (BIOS) verlorengegangen ist.

Bei dem Ausführungsbeispiel gemäß Fig. 3 ist zur Spannungsversorgung eine weitere Diode 24 vorgesehen, die mit dem Bus-Anschluß 28 verbunden ist. Dadurch ist die Spannungsversorgung auch dann sichergestellt, wenn das an dem Anschluß S8 anliegende Signal längere Zeit den Pegel 0 einnehmen sollte. Als zusätzliche Information wird beim Ausführungsbeispiel nach Fig. 3 ein über die Leitung S16 (Motor ein) zugeführtes Signal verwendet - beispielsweise als Startsiganl für das Steuersignal.

Fig. 4 zeigt ein Ausführungsbeispiel, bei welchem in einem Festwertspeicher ein Codewort abgelegt ist, welches bei Aufruf eines zugehörigen Anwenderprogramms abgefragt wird, um dieses vor unerlaubtem Kopieren bzw. vor der Benutzung einer unerlaubten Kopie zu schützen (Hardlock). In dem dafür vorgesehenen Festwertspeicher (PROM) 32 ist dieses Codewort unter einer ersten Adresse abgelegt. Eine zweite Adresse entspricht dem Freigabesignal. Wie bei dem Ausführungsbeispiel nach Fig. 3 wird das Freigabesignal in serieller Form über die Leitung S10 zugeführt. Ein Serie-Parallel-Wandler 31 wandelt das Freigabesignal in ein paralleles, beispielsweise 8 bit breites, Signal um, das dem Adresseneingang des PROMs 32 zugeführt wird. Unter der Adresse, welche dem Freigabesignal entspricht, ist im PROM ein Datenwort abgelegt, dessen Inhalt sich in einer Logikschaltung 33 derart widerspiegelt, so daß die Logikschaltung 33 nur ein Signal "1" abgibt, wenn dieses Datenwort am Ausgang des PROMs 32 anliegt. Somit wird bei richtigem Freigabesignal das Flip-Flop 14 gesetzt und der Transistor 15 in den nichtleitenden Zustand geschaltet.

Zwischen dem Ausgang des PROMs 32 und der Basis des Transistors 15 ist ferner ein Parallel-Serie-Wandler 34 angeordnet. Sowohl der Ausgang des Parallel-Serie-Wandlers 34 als auch der Aungang Q̅ des Flip-Flops 14 werden von offenen Kollektoren von PNP-Transistoren gebildet. Dadurch wird erreicht, daß der Transistor 15 leitend wird, auch wenn nur eines der Aubgangssignale den Pegel 1 einnimmt.

Wird beispielsweise nach dem Freischalten des Diskettenlaufwerks ein Anwenderprogramme gestartet, das mit einer Hardlock-Sicherheitbeinrichtung versehen ist, sendet dieses Programm über die Leitung S10 ein Signal zur Abfrage des Codewortes. Ist im PROM 32 das richtige Codewort gespeichert, wird es ausgelesen und über den Parallel-Serie-Wandler 34, den Transistor 15 und die Leitung S34 zum Computer geleitet, worauf das Programm benutzungsfähig wird.

Wegen der Freigabe des Diskettenlaufwerks könnte die Logikschaltung 33 auch direkt mit dem Ausgang des Serie-Parallel-Wandlers 31 verbunden sein, wozu das durch die Logikschaltung 33 verkörperte Datenwort direkt als Freigabesignal verwendet wird. Die Verwendung des PROMs 32 hat jedoch den Vorteil, daß bei einer individuellen Anpassung der erfindungsgemäßen Einrichtung an den jeweiligen Computer bzw. das jeweilige Anwenderprogramm auch verschiedene Freigabesignale lediglich durch Einsetzen verschiedener Festwertspeicher 32 vorgesehen sein können. Im übrigen zeigt Fig. 4 nur die wichtigsten Komponenten der Schalteinrichtung. Zum Betrieb des Festwertspeichers 33 und der weiteren Schaltungen sind noch weitere an sich bekannte Schaltungen, wie beispielsweise ein Taktgenerator, erforderlich.

Mit dem in Fig. 5 dargestellten Programm kann der Zugriff auf das Diskettenlaufwerk in einfacher Weise freigegeben werden. Nach einem Aufruf des Programms, beispielsweise unter dem Namen LWFREI.EXE wird das Programm bei 41 gestartet, worauf eine Verzweigung 42 nach einer im einzelnen nicht dargestellten Menueabfrage in Abhängigkeit davon erfolgt, ob 1. eine Änderung des Paßwortes oder 2. eine Freigabe des Diskettenlaufwerks erfolgen soll. Nach der Eingabe einer 1 wird bei 43 zur Eingabe des Paßwortes aufgefordert, worauf nach einer Verzweigung 44 bei einem falschen Paßwort das Programm bei 45 beendet wird oder bei 46 die Möglichkeit zur Eingabe eines neuen Paßwortes besteht. Danach wird ebenfalls das Programm beendet (47).

Wird bei 42 die Freigabe des Diskettenlaufwerks gewählt, fordert das Programm bei 48 zur Eingabe des Paßwortes auf. Sollte dieses nicht mit dem gespeicherten Paßwort übereinstimmen, so verzweigt sich das Programm bei 49 in Richtung auf eine weitere Verzweigung 50, in welcher entschieden wird, ob ein Zähler bereits den Wert 3 erreicht hat. Ist dieses der Fall, wird das Programm bei 51 beendet. Bei einer richtigen Paßworteingabe erfolgt nach der Verzweigung 49 ein Programmteil 52, mit dessen Hilfe das Freigabesignal auf den Bus geschaltet wird und somit zum Decoder 11, 12 oder 13 gelangt. Daraufhin wird bei 53 das Programm beendet.

Wie bereits erwähnt, kann zwischen einer Freigabe für einen lesenden oder einen schreibenden Zugriff unterschieden werden. Außerdem kann ein Sperren des Diskettenlaufwerks auch außerhalb der Startroutine vorgesehen sein. Dazu kann das Programm gemäß Fig. 5 durch entsprechende Abfragen und durch eine Erweiterung des Programmteils 52 auf die Erzeugung von verschiedenen Freigabesignalen bzw. einem Sperrsignal erweitert werden. Andere Erweiterungsmöglichkeiten des Programms bestehen darin, daß die Paßworteingabe und/oder Manipulationen am Programm oder an der Schalteinrichtung protokolliert werden. Schließlich kann das Programm bei einer Manipulation unbrauchbar gemacht werden. Auch eine akustische Meldung bei Eingabe eines falschen Paßwortes oder bei Manipulationen kann vorgesehen sein.

Fig. 6 ist eine Ansicht eines Moduls, das die Schalteinrichtung enthält und für Verbindung mit dem Shugart-Bus vorgesehen ist.

Fig. 7 zeigt in Tabellenform diejenigen Anschlüsse des Shugart-Busses, welche für eine erfindungsgemäße Einrichtung in Frage kommen.

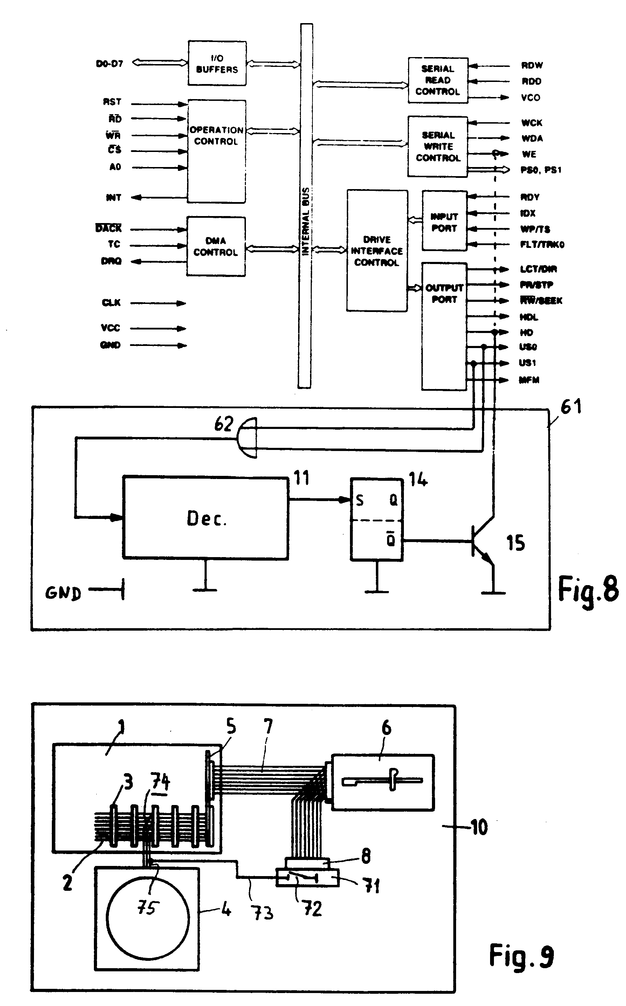

Fig. 8 zeigt eine weitere Aussführungsform der Erfindung, bei welcher die Schalteinrichtung nicht als zusätzlicher Baustein ausgeführt, sondern auf der Steuerkarte 5 (Fig. 1) für das Diskettenlaufwerk 6 angeordnet ist. Diese Steuerkarte beinhaltet im wesentlichen eine integrierte Schaltung, beispielsweise vom Typ INTEL 8272, als sogenannter Disc Controller. Von anderen Herstellern wird hierfür auch die Bezeichnung 765 verwendet. Eine Integration der Schalteinrichtung in diese integrierte Schaltung ist bei entsprechendem Bedarf durchaus möglich.

Bei der in Fig. 8 dargestellten Ausführungsform ist eine Schalteinrichtung 61 vorgesehen, welche im wesentlichen der bereits im Zusammenhang mit Fig. 2 beschriebenen entspricht. Der Kollektor des Schalttransistors 15 ist mit dem Ausgang HD des OUTPUT PORT verbunden. Zur Steuerung des Decoders 11 sind die beiden Ausgänge HS0 und HS1 über eine Oder-Schaltung 62 mit dem Eingang des Decoders 11 verbunden. Der Decoder 11 und das Flip-Flop 14 werden mit der Betriebsspannung VCC betrieben, die der integrierten Schaltung ohnehin zugeführt wird.

Die übrigen Teile der Schaltungsanordnung nach Fig. 8 entsprechen der bekannten integrierten Schaltung 765 und brauchen daher nicht näher erläutert zu werden. Anstelle einer Verbindung der Schalttransistors 15 mit dem Ausgang HD kann auch rin Schalten des Ausgangs WE erfolgen, was in Fig. 8 gestrichelt angedeutet ist.

Bei der Ausführungsform nach Fig. 9 ist eine Schalteinrichtung 71 bezüglich der Steuereingänge und der Spannungsversorgung wie bei Fig. 1 mit dem Shugart-Bus 7 verbunden. Der in der Schalteinrichtung enthaltene Schalter 72 ist jedoch über eine Leitung 73 an eine Leitung 75 des Busses 74 angeschlossen, welcher das Festplattenlaufwerk 4 mit der Hauptplatine 1 verbindet. Die Leitung 75 ist für ein Signal WRITE GATE vorgesehen, welches das Festplattenlaufwerk 4 in den Schreibbetrieb steuert. Durch Verbindung der Leitung 75 mit Masse über den Schalter 72 wird somit ein schreibender Zugriff auf die Festplatte verhindert. Die Schalteinrichtung 71 kann im übrigen entsprechend den Figuren 2 bis 4 aufgebaut sein.

## Patentansprüche

1. Einrichtung zum Schutz von Daten vor unberechtigtem Zugriff für einen Computer mit mindestens einem fest angeordneten Speicher, mit einer Schreib- und/oder Leseeinrichtung (Laufwerk) für einen beweglichen Datenträger und mit einem den. Computer und die Schreib- und/oder Leseeinrichtung verbindenden Bus, dadurch gekennzeichnet,
- daß eine Schalteinrichtung (9, 61) als separate Baueinheit ausgeführt ist und in an sich bekannter Weise einen Decoder (11, 12, 13) für ein einem Eingang zugeführtes Freigabesignal, einen Speicher (14; 18, 19, 20) für das Ausgangssignal des Decoders und mindestens einen mit einem Ausgang verbundenen Schalter (15; 21, 22, 23), vorzugsweise Halbleiterschalter, umfaßt, der von dem gespeicherten Ausgangssignal des Decoders steuerbar ist,
- daß Mittel zur Verbindung des Eingangs mit einer zur Zuführung des Freigabesignals vom Computer geeigneten Leitung (S10) des Busses (7, 2) vorgesehen sind und
- daß Mittel zur Verbindung des Ausgangs mit einer Leitung (S30, S32, S34, S26) des Busses (7, 2) vorgesehen sind, welche einen schreibenden und/oder lesenden Zugriff auf den beweglichen Datenträger sperrt oder freigibt.

2. Einrichtung nach Anspruch 1, dadurch gekennzeichnet, daß das Freigabesignal vom Computer mit Hilfe eines in dem fest angeordneten Speicher (4) abgelegten Programms - vorzugsweise nach Eingabe eines Paßwortes - erzeugt und der Schalteinrichtung zugeführt wird.

3. Einrichtung nach Anspruch 1, dadurch gekennzeichnet, daß ferner ein Sperrsignal vorgegeben ist, das den Zugriff auf den beweglichen Datenträger sperrt.

4. Einrichtung nach Anspruch 1, dadurch gekennzeichnet, daß verschiedene Signale für das Sperren bzw. Freigeben des schreibenden und des lesenden Zugriffs vorgesehen sind.

5. Einrichtung nach Anspruch 1, dadurch gekennzeichnet, daß ferner der Schalteinrichtung (9) über den Bus (7, 2) Betriebsspannung zuführbar ist.

6. Einrichtung nach Anspruch 5, dadurch gekennzeichnet, daß als Ausgänge Schalter für eine oder mehere der Leitungen "gelesene Daten", "Schreibschutz", "Auswahl Seite 1" und "Laufwerk offen (Disk change)" vorgesehen sind.

7. Einrichtung nach Anspruch 6, dadurch gekennzeichnet, daß für einen Computer mit einem Shugart-Bus Schalter zur Verbindung eines oder mehrerer der Anschlüsse 28, 30, 32 und 34 mit Massepotential vorgesehen sind.

8. Einrichtung nach Anspruch 7, dadurch gekennzeichnet, daß ferner ein Freigabe- und/oder ein Sperrsignal über den Anschluß 10 übertragbar ist.

9. Einrichtung nach Anspruch 8, dadurch gekennzeichnet, daß die Spannungsversorgung der Schalteinrichtung (9) über den Anschluß 8 oder über die Anschlüsse 8 und 28 erfolgt.

10. Einrichtung nach Anspruch 2, dadurch gekennzeichnet, daß das Programm zur Erzeugung des Freigabesignals durch Eingabe des Programmnamens mit dem Paßwort als Parameter aufrufbar ist.

11. Einrichtung nach Anspruch 10, dadurch gekennzeichnet, daß bei einer vorgegebenen Anzahl von Eingaben des Programmnamens mit einem falschen Paßwort ein weiterer Aufruf des Programms zusammen mit dem Paßwort verhindert wird.

12. Einrichtung nach Anspruch 1, dadurch gekennzeichnet, daß in der Schalteinrichtung ein Speicher für ein Codewort vorgesehen ist.

13. Einrichtung nach Anspruch 10, dadurch gekennzeichnet, daß im Programm Maßnahmen zur Protokollierung der jeweils letzten Paßworteingabe und/oder einer Manipulation am Programm vorgesehen sind.

14. Einrichtung nach Anspruch 10, dadurch gekennzeichnet, daß im Programm Maßnahmen vorgesehen sind, welche nach einer Manipulation am Programm das Programm unbrauchbar machen.

15. Einrichtung nach Anspruch 10, dadurch gekennzeichnet, daß im Programm eine akustische Meldung vorgesehen ist, wenn ein falsches Paßwort eingegeben wird oder wenn an dem Programm manipuliert wird.

16. Einrichtung nach Anspruch 1, dadurch gekennzeichnet, daß die steuerbare Schalteinrichtung (61) auf einer Steuerkarte (5) angeordnet ist, welche zur Steuerung der Schreib- und/oder Leseeinrichtung vorgesehen ist.

17. Einrichtung nach Anspruch 16, dadurch gekennzeichnet, daß die steuerbare Schalteinrichtung (61) in einer als integrierte Schaltung ausgeführten Steuerschaltung (Controller) angeordnet ist.

18. Einrichtung zum Schutz von Daten vor unberechtigtem Zugriff für einen Computer mit mindestens einem fest angeordneten Speicher, mit einer Schreib- und/oder Leseeinrichtung (Laufwerk) für einen beweglichen Datenträger und mit einem den Computer und die Schreib- und/oder Leseeinrichtung verbindenden Bus, dadurch gekennzeichnet,
- daß eine Schalteinrichtung (71) als separate Baueinheit ausgeführt ist und in an sich bekannter Weise einen Decoder (11, 12, 13) für ein einem Eingang zugeführtes Freigabesignal, einen Speicher (14; 18, 19, 20) für das Ausgangssignal des Decoders und mindestens einen mit einem Ausgang verbundenen Schalter (15; 21, 22, 23), vorzugsweise Halbleiterschalter, umfaßt, der von dem gespeicherten Ausgangssignal des Decoders steuerbar ist,
- daß Mittel zur Verbindung des Eingangs mit einer zur Zuführung des Freiganbesignals vom Computer geeigneten Leitung (S10) des Busses (7, 2) vorgesehen sind und
- daß Mittel zur Verbindung des Ausgangs mit einer Leitung (74) zwischen dem Computer und dem fest angeordneten Speicher (4) vorgesehen sind, welche ein Signal zur Umschaltung des fest angeordneten Speichers (4) auf Schreibbetrieb führt.

19. Einrichtung nach Anspruch 5, dadurch gekennzeichnet, daß mindestens ein Anschluß der Schalteinrichtung (9, 61) für die Betriebsspannung mit einer Leitung (S8, S28) des Busses (7, 2) verbindbar ist und daß der Anschluß über eine Diode (16, 24) mit einem Kondensator (17) verbunden ist.

20. Einrichtung nach Anspruch 19, dadurch gekennzeichnet, daß mehrere Anschlüsse mit je einer Leitung (S8, S28) des Busses (7, 2) verbindbar sind und daß die Anschlüsse über je eine Diode (16, 24) mit einem Kondensator (17) verbunden sind.

## Claims

1. Arrangement for the protection of data from unauthorised access for a computer with at least one fixed store, with a write and/or read device (drive) for a movable data carrier and with a bus connecting the computer and the write and/or read device, characterized in that
- a circuit arrangement (9, 61) is provided as a separate modular unit and comprises in known manner a decoder (11, 12, 13) for a release signal supplied at an input, a store (14; 18, 19, 20) for the output signal of the decoder and at least one switch (15; 21, 22, 23) connected to an output, preferably a semiconductor switch, which is controllable from the stored output signal of the decoder,
- means are provided for the connection of the input with a conductor (S10) of the bus (7, 2) suited to the supply of the release signal from the computer and
- means are provided for the connection of the output with a conductor (S30, S32, S34, S26) of the bus (7, 2) which inhibits or releases write and/or read access to the movable data carrier.

2. Arrangement according to claim 1, characterized in that the release signal is produced and supplied to the circuit arrangement from the computer with the aid of a program recorded in the fixed store (4) preferably after input of a pass word.

3. Arrngement according to claim 1, characterized in that furthermore an inhibit signal is preset, which inhibits access to the movable data carrier.

4. Arrangement according to claim 1, characterized in that different signals are provided for the inhibition or release of write and read access.

5. Arrangement according to claim 1, characterized in that furthermore network voltage may be supplied to the circuit arrangement (9) over the bus (7, 2).

6. Arrangement according to claim 5, characterized in that there are provided as outputs switches for one or more of the conductors "read data", "write protection", "selection page 1", and "disk change".

7. Arrangement according to claim 6, characterized in that there are provided for a computer with a Shugart bus switches for connecting one or more of the connections 28, 30, 32 and 34 with earth potential.

8. Arrangement according to claim 7, characterized in that furthermore a release and/or inhibit signal is transmissible over the connection 10.

9. Arrangement according to claim 8, characterized in that the voltage supply of the circuit arrangement (9) takes place over the connection 8 or over the connections 8 and 28.

10. Arrangement according to claim 2, characterized in that the program for the production of the release signal can be called by input of the program name with the pass word as a parameter.

11. Arrangement according to claim 10, characterized in that with a preset number of inputs of the program name with a wrong pass word a further call of the program together with the pass word is prevented.

12. Arrangement according to claim 1, characterized in that a store for a code word is provided in the circuit arrangement.

13. Arrangement according to claim 10, characterized in that means are provided in the program for the listing of the last pass word entry at any one time and/or a manipulation of the program.

14. Arrangement according to claim 10, characterized in that means are provided in the program which render the program inoperative after a manipulation of the program.

15. Arrangement according to claim 10, characterized in that an acoustic report is provided in the program when a wrong pass word is entered or when the program is being manipulated.

16. Arrangement according to claim 1, characterized in that the controllable circuit arrangement (61) is disposed on a control card (5) which is provided for the control of the write and/or read device.

17. Arrangement according to claim 16, characterized in that the controllable circuit arrangement (61) is disposed in a control circuit in the form of an integrated circuit (controller).

18. Arrangement for the protection of data from unauthorised access for a computer with at least one fixed store with a write and/or read device (drive) for a movable data carrier and with a bus connecting the computer and the write and/or read device, characterized in that
- a circuit arrangement (71) is provided as a separate modular unit and comprises in known manner a decoder (11, 12, 13) for a release signal supplied at an input, a store (14; 18, 19, 20) for the output signal of the decoder and at least one switch (15; 21, 22, 23) connected to an output, preferably a semiconductor switch, which is controllable from the srored output signal of the decoder,
- means are provided for the connection of the input with a conductor (S10) of the bus (7,2) for the supply of the release signal from the computer and
- means are provided for the connection of the output with a conductor (74) between the computer and the fixed store (4) which conducts a signal for the switching of the fixed store (4) to write operation.

19. Arrangement according to claim 5, characterized in that at least one connection of the circuit arrangement (9, 61) for the operating voltage is connectable with a conductor (S8, S28) of the bus (7, 2) and that the connection is connected to a condenser (17) over a diode (16, 24).

20. Arrangement according to claim 19, characterized in that several connections are each connectable with one conductor (S8, S28) of the bus (7, 2) and in that the connections are each connected with a condenser (17) over a diode (16, 24) each.

## Revendications

1. Dispositif pour protéger des données contre un accès illicite pour un calculateur avec au moins une mémoire disposée de façon inamovible avec un dispositif d'écriture et/ou de lecture (mécanisme de déroulement) pour un support mobile de données, et avec un bus reliant l'ordinateur et le dispositif d'écriture et/ou de lecture, dispositif de protection caractérisé en ce que:
- on réalise un circuit (9, 61) sous forme d'une unité séparée et qui comprend d'une manière connue en soi un décodeur (11, 12, 13) pour un signal de libération envoyé à une entrée, une mémoire (14, 18, 19, 20) pour le signal de sortie du décodeur et au moins un commutateur (15, 21, 22, 23) relié à une sortie, de préférence un commutateur à semiconducteur, qui peut être commandé par le signal de sortie mis en mémoire du décodeur,
- on prévoit des moyens de liaison de l'entrée avec un conducteur (S10) approprié du bus (7, 2) pour l'envoi par l'ordinateur du signal de libération et
- on prévoit des moyens pour relier la sortie à un conducteur (S30, S32, S34, S36) du bus (7, 2), qui bloquent ou libèrent un accès d'écriture et/ou de lecture au support mobile de données.

2. Dispositif selon la revendication 1, caractérisé en ce que le signal de libération est produit par l'ordinateur à l'aide d'un programme mis dans la mémoire (4) disposée de façon inamovible - de préférence après entrée d'un mot de passe et est envoyé au circuit.

3. Dispositif selon la revendication 1, caractérisé en ce qu'en outre on a un signal de blocage qui bloque l'accès au support mobile de données.

4. Dispositif selon la revendication 1, caractérisé en ce que différents signaux sont prévus pour le blocage ou la libération de l'accès d'écriture et de l'accès de lecture.

5. Dispositif selon la revendication 1, caractérisé en ce qu'en outre on peut amener une tension de fonctionnement au circuit (9) via le bus (7, 2).

6. Dispositif selon la revendication 5, caractérisé en ce que l'on prévoit comme sorties des commutateurs pour un ou plusieurs des conducteurs "données lues", "protection d'enregistrement", "choix côté sortie 1", et "mécanisme de déroulement ouvert" (changement de disque).

7. Dispositif selon la revendication 6, caractérisé en ce que l'on prévoit pour un ordinateur avec un bus Shugart, un commutateur pour relier un ou plusieurs des raccords (28, 30, 32 et 34) au potentiel de la masse.

8. Dispositif selon la revendication 7, caractérisé en ce qu'en outre on peut transférer un signal de libération et/ou de blocage via le raccord (10).

9. Dispositif selon la revendication 8, caractérisé en ce que l'on obtient l'alimentation en tension du circuit (9) via le raccord (8) ou via les raccords (8 et 28).

10. Dispositif selon la revendication 2, caractérisé en ce que le programme pour produire le signal de libération peut être appelé en introduisant le nom du programme avec le mot de passe comme paramètre.

11. Dispositif selon la revendication 10, caractérisé en ce que dans le cas d'un nombre prédéfini d'entrées du nom du programme avec un mot de passe faux on empêche un nouvel appel du programme en même temps que le mot de passe.

12. Dispositif selon la revendication 1, caractérisé en ce que l'on prévoit dans le circuit une mémoire pour un mot de code.

13. Dispositif selon la revendication 10, caractérisé en ce que dans le programme sont prévus des mesures pour dresser la liste des dernières entrées de mots de passe et/ou d'une manipulation du programme.

14. Dispositif selon la revendication 10, caractérisé en ce que l'on prévoit dans le programme des mesures, qui rendent le programme inutilisable après une manipulation de celui-ci.

15. Dispositif selon la revendication 10, caractérisé en ce que l'on prévoit dans le programme une annonce acoustique quand un faux mot de passe a été introduit ou quand le programme a été manipulé.

16. Dispositif selon la revendication 1, caractérisé en ce que le circuit susceptible d'être commandé (61) est disposé dans une carte de commande qui est pourvue pour la commande d'un dispositif d'écriture et/ou d'écriture.

17. Dispositif selon la revendication 16, caractérisé en ce que le circuit pouvant être commandé (61) est disposé dans un circuit de commande (contrôleur) réalisé comme un circuit intégré.

18. Dispositif pour la protection de données contre un accès non autorisé pour un ordinateur avec au moins une mémoire disposée de façon inamovible, avec un dispositif d'écriture et/ou de lecture (mécanisme de déroulement) pour un support mobile de données et avec un bus reliant l'ordinateur et le dispositif d'écriture et/ou de lecture, dispositif de protection de données caractérisé en ce que :
- on réalise un circuit (71) sous forme d'une unité séparée et qui comprend d'une manière connue en soit un décodeur (11, 12, 13) pour un signal de libération envoyé à une entrée, une mémoire (14, 18, 19, 20) pour le signal de sortie du décodeur et au moins un commutateur (15, 21, 22, 23) relié à une sortie, de préférence un commutateur à semiconducteur, qui peut être commandé par le signal de sortie mis en mémoire du décodeur,
- on prévoit des moyens de liaison de l'entrée avec un conducteur (S10) approprié du bus (7, 2) pour l'envoi par l'ordinateur du signal de libération et
- on prévoit des moyens pour relier la sortie à un conducteur (74) entre l'ordinateur et la mémoire (4) disposée de façon inamovible, qui amène un signal pour commuter la mémoire (4) disposée de façon inamovible, qui amène un signal pour commuter la mémoire (4) disposée de façon inamovible sur le fonctionnement en écriture.

19. Dispositif selon la revendication 5, caractérisé en ce qu'au moins un raccord du circuit (9, 61) peut être relié pour la tension de fonctionnement à un conducteur (S8, S28) du bus (7, 2) et en ce que le raccord est relié par une diode (16, 24) à un condensateur (17).

20. Dispositif selon la revendication 19, caractérisé en ce que l'on peut relier plusieurs raccords chacun à un conducteur (S8, S28) du bus (7, 2) et que les raccords sont reliés chacun par une diode (16, 24) à un condensateur (17).
